# EUROPEAN PATENT SPECIFICATION

(11) **EP 0 550 884 B1**
(45) Date of publication and mention of the grant of the patent: **05.06.1996**
(21) Application number: 92121875.6
(22) Date of filing: 23.12.1992
(51) Int. Cl.: G03B 17/24

(54) **Camera with selectable exposure formats**
Kamera mit wählbarem Bildformat
Caméra permettant de sélectionner des formats d'exposition

(30) Priority: 10.01.1992 US 818950
(43) Date of publication of application: 14.07.1993
(73) Proprietor: EASTMAN KODAK COMPANY, Rochester, New York 14650-2201 (US)
(72) Inventor: Burnham, William Lawrence, c/o EASTMAN KODAK CO., Rochester, New York 14650-2201 (US)
(74) Representative: Blickle, K. Werner, Dipl.-Ing.

(56) References cited:
- US-A- 3 678 834
- US-A- 4 011 570
- US-A- 4 349 257
- PATENT ABSTRACTS OF JAPAN vol. 14, no. 521 (P-1131)15 November 1990 & JP-A-02 217 825
- PATENT ABSTRACTS OF JAPAN vol. 14, no. 59 (P-1000)2 February 1990 &JP-A-01 282 531

## Description

The invention relates generally to the field of photographic cameras, and in particular to a camera with selectable exposure formats.

In a typical 35mm camera, the backframe opening adjacent the film plane is dimensioned to make an exposure with a length-to-width, i.e. aspect, ratio of 1.5:1. Specifically, the size of the exposure is about 36.4 mm in length and 24.4 mm in width.

There are times, however, when it is desirable to make an exposure that has a "stretched" or panoramatic-type format, such as when taking a picture of a parade or a tall building. Cameras for this purpose, such as disclosed in U.S. Patents No. 4,249,812, issued February 10, 1981, and No. 3,678,834, issued July 25, 1972, suggest the use of masks at the back frame opening to change the length-to-width ratio of an exposure from 1.5:1 to 2:1 or 3:1. Masks, however, mechanically complicate cameras and are relatively costly to add.

The problems associated with such mask are overcome by a photographic camera as set out in claim 1.

Preferably, the light source means is positioned relative to the back frame opening to over-expose only one or more longer edge portions of a unit area of light-sensitive film to change the length-to-width ratio for an exposure made at the back frame opening to one that is greater than had the unit area been exposed only at the back frame opening. As a result, an exposure can be obtained which has a "stretched" or panoramic type appearance.
FIG. 1 is a sectional view of a photographic camera according to a preferred embodiment of the invention;
FIG. 2 is a plan view of a filmstrip exposed in the camera; and
FIG. 3 is a schematic view of a control circuit in the camera.

The invention is disclosed as being embodied in a compact 35mm camera. Because such photographic cameras have become well known, this description is directed in particular to camera elements forming part of or cooperating directly with the preferred embodiment. It is to be understood, however, that camera elements not specifically shown or described may take various forms known to persons of ordinary skill in the art.

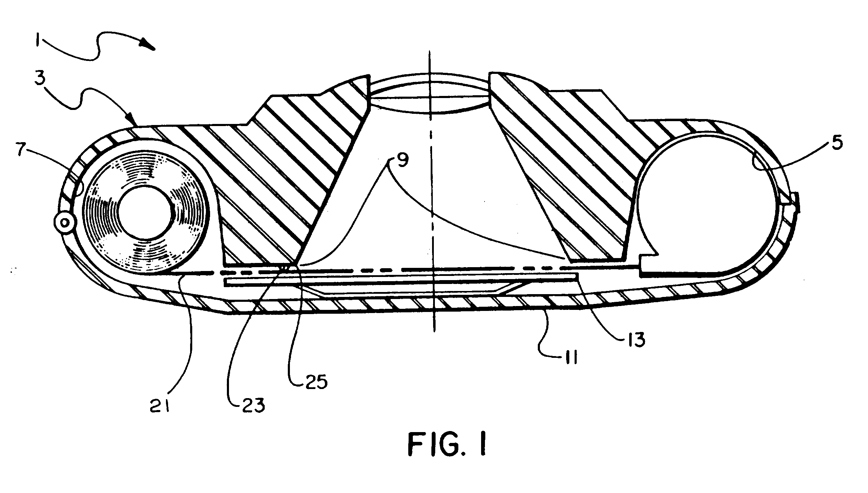

Referring to FIG. 1, there is shown a compact camera 1 having a camera body 3 including a film cartridge receiving chamber 5, a film take-up chamber 7, and a back frame or exposure opening 9. A door 11 pivotally connected to the camera body 3 includes a film pressure plate 13 on its inside.

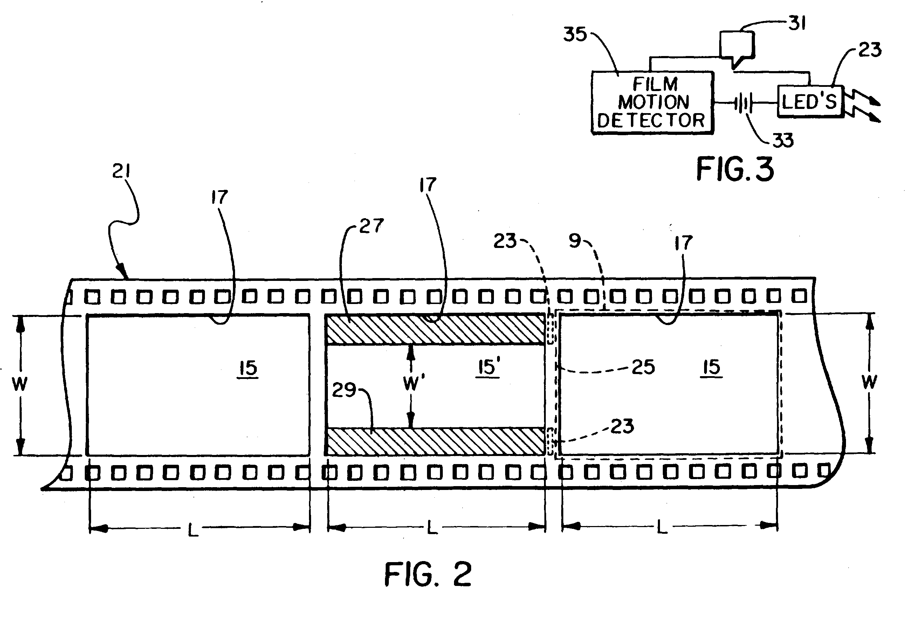

The back frame opening 9 is sized to make an exposure 15 on a unit area 17 of light-sensitive 35 mm film 21 that has a length-to-width ratio L:W which is approximately 1.5:1. Specifically, the length L of the exposure 15 is 36.5 mm and the width W of the exposure is 24.4 mm. See FIG. 2.

According to the invention, a pair of identical light emitting diodes (LED's) 23 are positioned adjacent a shorter side 25 of the back frame opening 9 to over-expose or fog respective parallel longer edge portions 27 and 29 of the exposure 15 (or the film unit area 17) when it is desired to make an exposure that has a "stretched" or panoramic-type format. See FIG. 2. Preferably, the remaining useful portion 15' of the exposure 15 has a length-to-width ratio L:W' which is almost 3:1. In particular, the length L of the remaining useful portion 15' is 36.4 mm and the width W' of the useful portion is 13.3 mm.

The two LED's 23 when activated are intended to provide an intensity of light, during the time the film 21 is advanced approximately the distance L from the back frame opening 9 toward the take-up chamber 7, which over-exposes or fogs the parallel longer edge potions 27 and 29 of the exposure 15 sufficiently to make the longer edge portions blackened after development. This blackening produced by exposure followed by processing as is well known can be quantitatively measured as "density".

Manual control means in the form of a push button switch 31 connected to the LED's 23, a battery 33 and a known film motion detector 35 is shown in FIG. 3 for selectively activating or not activating the LED's to change or not change the length-to-width ratio L:W of the exposure 15. In place of the manual control means, other means can be provided for always activating the LED's when the film 21 is advanced.

The invention has been described with reference to a preferred embodiment. However, it will be appreciated that various modifications can be effected within the ordinary skill in the art without departing from the scope of the invention as claimed. For example, instead of two LED's 23 to over-expose or fog the parallel longer edge portions 27 and 29 of the exposure 15 as the exposure is moved from the back frame opening, a single LED may be employed to over-expose only one of the longer edge portions. Also, instead of locating the LED's 23 adjacent the shorter side 23 of the back frame opening 9, the LED's can be located adjacent the opposite side of the back frame opening to over-expose or fog the unit area 17 of the film 21 before the unit area is exposed. Also, other light sources such as an incandescent lamp can be used in place of the LED's.

## Claims

1. Photographic camera (1) with selectable exposure formats, comprising
a back frame opening (9) for making an exposure (16) with a first pre-selected length-to-width ratio on a standard area (17) of light-sensitive film (21); and
exposure format setting means (23) for effecting an exposure with a second pre-selected length-to-width ratio different from the first one on said standard area (17), characterized in that:
the exposure format setting means comprises light source means (23) positioned relative to said back frame opening (9) such that at least one edge portion (27; 29) of the standard area (17) of light-sensitive film (21) can be over-exposed thereby changing the length-to-width ratio of an exposure made at the back frame opening from said first pre-selected length-to-width ratio to said second one (15').

2. Photographic camera (1) as recited in claim 1, wherein said light source means (23) is arranged to over-expose only one or more longer edge portions (27, 29) of said standard area (17) of light-sensitive film (21) thereby resulting in the second length-to-width ratio being (15') being greater than the first one.

3. Photographic camera (1) as recited in claim 2, wherein said back frame opening (9) is sized to make an exposure (15) with a first length-to-width ratio that is approximately 1.5 : 1, and said light source means is sized to change the second length-to-width ratio for the exposure from 1.5 : 1 to at least 2 : 1.

4. Photographic camera (1) as recited in claim 2, wherein said light source means (23) is positioned adjacent a shorter side (25) of said back frame opening (9).

5. Photographic camera (1) as recited in claim 1, wherein
manual control means (31, 33,35) is connected to said light source means (23) for selectively activating or not activating the light source means to change or not the length-to-width ratio of an exposure (15).

## Patentansprüche

1. Fotografische Kamera (1) mit auswählbaren Bildformaten, die ein rückseitiges Bildfenster (9) zum Belichten eines Standardbereichs (17) eines lichtempfindlichen Films (21) mit einem ersten vorwählbaren Verhältnis von Länge zu Breite sowie ein Bildformat-Einstellmittel (23) zum Belichtung des Standardbereichs (17) mit einem sich vom ersten unterscheidenden zweiten, vorwählbaren Verhältnis von Länge zu Breite umfaßt, **dadurch gekennzeichnet**, daß das Bildformat-Einstellmittel eine bezüglich des rückseitigen Bildfensters (9) derart angeordnete Lichtquelle umfaßt, daß mindestens ein Randabschnitt (27; 29) des Standardbereichs (17) des lichtempfindlichen Films (21) überbelichtbar ist, wodurch sich bei einer Belichtung am rückseitigen Bildfenster das Verhältnis von Länge zu Breite vom ersten vorwählbaren Wert zum zweiten (15') verändert.

2. Fotografische Kamera (1) nach Anspruch 1, dadurch gekennzeichnet, daß die Lichtquelle (23) derart angeordnet ist, daß nur einer oder mehrere längere Randabschnitte (27, 29) des Standardbereichs (17) des lichtempfindlichen Films (21) überbelichtbar ist/sind, was dazu führt, daß das zweite Verhältnis von Länge zu Breite (15') größer ist als das erste.

3. Fotografische Kamera (1) nach Anspruch 2, dadurch gekennzeichnet, daß das rückseitige Bildfenster (9) derart bemessen ist, daß eine Belichtung (15) mit einem ersten Verhältnis von Länge zu Breite von etwa 1,5 : 1 erfolgt und daß die Lichtquelle derart bemessen ist, daß bei der Belichtung das zweite Verhältnis von Länge zu Breite von 1,5 : 1 auf mindestens 2 : 1 veränderbar ist.

4. Fotografische Kamera (1) nach Anspruch 2, dadurch gekennzeichnet, daß die Lichtquelle (23) einer kürzeren Seite (25) des rückseitigen Bildfensters (9) benachbart angeordnet ist.

5. Fotografische Kamera (1) nach Anspruch 1, dadurch gekennzeichnet, daß manuell betätigbare Steuermittel (31, 33, 35) mit der Lichtquelle (23) gekoppelt sind, um die Lichtquelle wahlweise zu aktivieren oder zu deaktivieren und damit das Verhältnis von Länge zu Breite eines Bildes (15) zu verändern oder nicht zu verändern.

## Revendications

1. Appareil photographique (1) avec formats d'exposition pouvant être sélectionnés, comprenant un cadre de vue arrière (9) destinée à faire une exposition (16) avec un premier rapport longueur sur largeur pré-sélectionné sur une surface standard (17) de film photosensible (21), et
un moyen de réglage de format d'exposition (23) destiné à réaliser une exposition avec un second rapport longueur sur largeur pré-sélectionné différent du premier rapport sur ladite surface standard (17), caractérisé en ce que :
le moyen de réglage de format d'exposition comprend un moyen de source lumineuse (23) positionné par rapport audit cadre de vue arrière (9) de façon à ce qu'au moins une partie de bord (27, 29) de la surface standard (17) du film photosensible (21) puisse être surexposée en faisant passer ainsi le rapport longueur sur largeur d'une exposition faite au niveau du cadre de vue arrière, dudit premier rapport longueur sur largeur pré-sélectionné audit second rapport (15').

2. Appareil photographique (1) selon la revendication 1, dans lequel ledit moyen de source lumineuse (23) est agencé pour surexposer uniquement une ou plusieurs parties de bords plus longues (27, 29) de ladite surface standard (17) du film photosensible (21) ce qui résulte en ce que le second rapport longueur sur largeur (15') est supérieur au premier rapport.

3. Appareil photographique (1) selon la revendication 2, dans lequel ledit cadre de vue arrière (9) est dimensionnée pour faire une exposition (15) avec un premier rapport longueur sur largeur qui est approximativement 1,5 : 1 et ledit moyen de source lumineuse est dimensionné pour faire passer le second rapport longueur sur largeur de l'exposition de 1,5 : 1 à au moins 2 : 1.

4. Appareil photographique (1) selon la revendication 2, dans lequel ledit moyen de source lumineuse (23) est positionné de façon contiguë à un côté plus court (25) dudit cadre de vue arrière (9).

5. Appareil photographique (1) selon la revendication 1, dans lequel
un moyen de commande manuel (31, 33, 35) est relié audit moyen de source lumineuse (23) pour activer ou ne pas activer sélectivement le moyen de source lumineuse afin de changer ou non le rapport longueur sur largeur d'une exposition (15).
